# FASCICULE DE BREVET EUROPEEN

(11) **EP 0 454 520 B1**
(45) Date de publication et mention de la délivrance du brevet: **18.05.1994**
(21) Numéro de dépôt: 91400895.8
(22) Date de dépôt: 02.04.1991
(51) Int. Cl.: B29C 43/30, B32B 31/00

(54) **Procédé de fabrication d'une feuille d'un matériau composite comprenant une plaque de polyméthacrylate de méthyle coulée réunie à une couche support thermoplastique et produits obtenus**
Verfahren zur Herstellung einer eine aus Polymethylmethacrylat gegossene Platte und eine thermoplastische Grundschicht enthaltenden Verbundfolie und so erhaltenes Produkt
Method for producing a composite sheet comprising a cast polymethylmethacrylate sheet and a thermoplastic support layer and product obtained in such a way

(30) Priorité: 27.04.1990 FR 9005381
(43) Date de publication de la demande: 30.10.1991
(73) Titulaire: Société dite : TECHNOPLAST (Société Anonyme), 10430 Rosières (FR)
(72) Inventeur: Queirel, Joel, F-10000 Troyes (FR)
(74) Mandataire: Lerner, François

(56) Documents cités:
- DE-A- 2 730 899
- GB-A- 2 080 199
- US-A- 3 798 103

## Description

Le polyméthacrylate de méthyle dénommé couramment en abrégé PMMA (correspondant à la dénomination anglaise polymethyl methacrylate) permet de constituer, lorsqu'on utilise la technique de coulée entre des plaques de verre suivi d'une polymérisation de plusieurs heures, des plaques d'un matériau noble telles que les plaques commercialisées sous les noms de marques "Plexiglass, Altuglass, etc...". Ces plaques ont l'aspect du verre, sans en avoir cependant la dureté ; mais elles présentent une souplesse qui permet de les utiliser pour de nombreuses applications dans lesquelles le verre ne peut être mis commodément en oeuvre.

En particulier, les baignoires fabriquées en matière plastique doivent obligatoirement comporter comme couche extérieure une plaque formée de PMMA coulée.

Etant donné que ce matériau est très cher, et ne présente d'autre part pas toutes les qualités requises d'utilisation pour ce genre de produit, en particulier au niveau de la rigidité et de la masse, il faut habiller la plaque de PMMA convenablement conformée au moyen de produits de renforcement et rigidification, tels que fibres de verre convenablement projetées et encollées sur la sous-face de la feuille avec adjonction de renforts fréquemment en bois, aggloméré ou contreplaqué notamment sous la ceinture supérieure de la baignoire et sous le fond.

Bien entendu toutes ces opérations de finition de type essentiellement artisanal, grèvent considérablement le prix du produit fini, sans que ce produit ait les qualités de fini souhaitables et bien reproductibles.

On a bien entendu tenté d'assembler la plaque noble de PMMA sur des plaques ou feuilles de matières plastiques moins nobles et présentant des caractéristiques complémentaires satisfaisantes de rigidité ou de masse. Mais ces essais ont été abandonnés car il n'ont donné aucun résultat satisfaisant au niveau plus particulièrement d'une jonction entre les deux matériaux PMMA et autre matière plastique qui n'apparaissent pas compatibles et se séparent à la moindre sollicitation. Des essais de collage se sont également révélés décevants et bien entendu la coextrusion du PMMA et de la matière thermoplastique n'est pas envisageable, car dans ce cas il est impossible d'obtenir la qualité de la feuille coulée et polymérisée sous plaques de verre dont il a été question ci-dessus.

L'invention a pour objet de résoudre ces difficultés.

Pour ce faire, conformément à l'invention, on procède à la fabrication d'une feuille d'un matériau composite comprenant une plaque d'un PMMA (polyméthacrylate de méthyle) préfabriquée par coulée qui constituera une couche externe du matériau composite et une couche support d'une matière thermoplastique telle que ABS (polyacrylonitrile butadiène styrène) ou analogue, le procédé étant caractérisé en ce qu'en vue d'obtenir une parfaite cohésion et jonction des deux couches entre-elles, on alimente par une extrudeuse une machine comportant des rouleaux de calandrage de façon à former une feuille continue extrudée de ladite matière thermoplastique, on approvisionne régulièrement à l'entrée de la machine d'un côté de la feuille de matière thermoplastique formée lesdites plaques de PMMA qui sont calandrées simultanément avec la feuille de matière thermoplastique entre les rouleaux de calandrage de la machine, et l'on découpe à la sortie de la machine de calandrage les feuilles de matériau composite obtenues constituées des plaques de PMMA précitées assemblées sur une couche-support en matière thermoplastique précitée.

De façon à obtenir la parfaite cohésion des deux feuilles, les plaques de PMMA sont calandrées de préférence contre la feuille extrudée de matière thermoplastique dès sa sortie de l'extrudeuse, la première action de calandrage assurant une application de la matière thermoplastique encore fluide contre la plaque de PMMA non fluide. Par exemple, si la matière thermoplastique est du type ABS, la température d'alimentation de la feuille d'ABS au niveau du premier train de calandrage sera voisine de 240° C, tandis que les plaques de polyméthacrylate de méthyle, par exemple d'une épaisseur de 3 mm seront amenées une à une à la température ambiante et calandrées avec la feuille d'ABS dès sa sortie de l'extrudeuse.

L'invention vise en outre les feuilles de matériau composite obtenues selon le procédé de l'invention, ainsi que les produits finis formés à partir de ces feuilles.

D'autres caractéristiques, objets et avantages de l'invention apparaîtront plus clairement à l'aide de la description qui va suivre faite en référence aux dessins annexés donnés uniquement à titre d'exemple et dans lesquels :

La figure 1 montre de façon schématique le procédé de fabrication des feuilles de matériau composite conformes à l'invention.

La figure 2 est une vue en coupe faite dans le plan II-II de la figure 1.

La figure 3 montre comme la figure 2 une vue en coupe d'une feuille composite à épaisseur variable pouvant être obtenue.

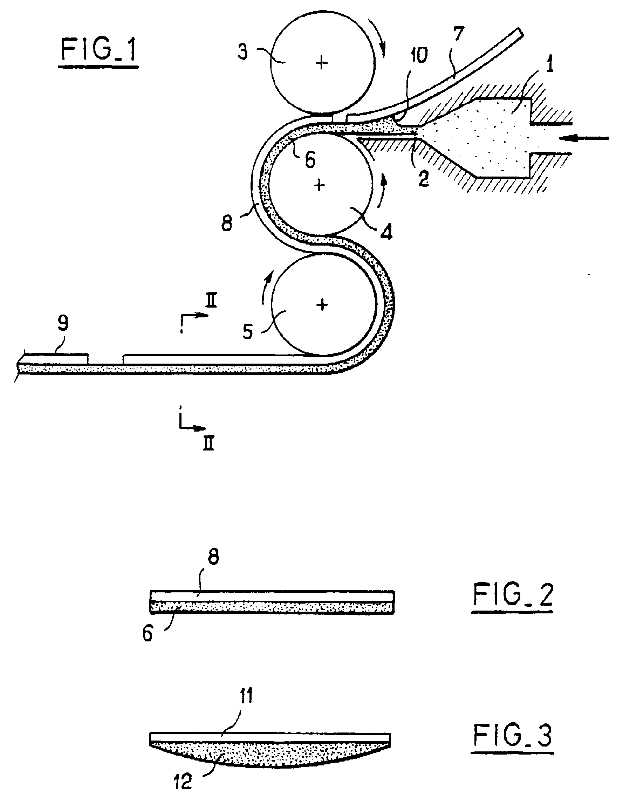

En se référant tout d'abord aux figures 1 et 2, on expliquera plus en détail le procédé de fabrication du matériau composite conforme à l'invention.

Aux figures les proportions n'ont pas été respectées, en particulier les épaisseurs des feuilles ont été considérablement exagérées de façon à faciliter la lecture des dessins, les longueurs des feuilles ayant été au contraire réduites proportionnellement.

Selon l'exemple de mise en oeuvre illustré à la figure 1, la feuille de matière thermoplastique telle qu'ABS se forme en 2 à la sortie d'une extrudeuse 1 pour venir alimenter une machine de calandrage comportant dans l'exemple illustré trois rouleaux de calandrage repérés 3, 4 et 5. La matière thermoplastique sort de l'extrudeuse par exemple vers 240° C, température à laquelle elle est fluide.

Dès l'entrée du premier train de calandrage, constitué par les rouleaux 3 et 4, on alimente par-dessus la feuille continue 6 de matière thermoplastique extrudée des plaques unitaires telles que repérées 7, 8, 9 coulées en polyméthacrylate de méthyle. Les feuilles de PMMA ont une épaisseur de quelques millimètres, généralement comprises entre 2,5 et 4 mm pouvant éventuellement être réduites jusqu'à 1 mm d'épaisseur ou au contraire augmentée jusqu'à 7, voire 10 mm. Les plaques de PMMA sont amenées à la température ambiante, et à l'entrée du train de calandrage, à la jonction avec la matière ABS encore fluide, il se forme un bourrelet tel que schématisé en 10.

Dans la pratique il apparaît que c'est le choix de la mise en contact de la feuille de PMMA à température ambiante avec la matière thermoplastique encore fluide et le calandrage immédiat du matériau composite ainsi formé qui assure une excellente adhésion et jonction des deux matières interdisant ensuite leur séparation.

Dans un exemple de mise en oeuvre ayant donné satisfaction, les plaques 7 avaient une épaisseur de 3 mm, la feuille 6 d'ABS avait une épaisseur de 3 mm également, le diamètre des rouleaux de calandrage était de 300 mm, et les températures des rouleaux 3, 4 et 5 étaient respectivement de 80° C, 90° C et 90° C. Un matériau composite d'excellente qualité rétif à toute séparation des deux couches était obtenu avec une vitesse de défilement de 0,75 m/mn, le matériau composite sortant à l'issu du troisième rouleau de calandrage à une température voisine de 50 à 60° C.

Bien entendu il est possible, à l'initiative du technicien de jouer sur la vitesse de défilement du train de laminage, de jouer sur la pression de laminage en modifiant l'écartement entre les rouleaux, de jouer également sur le nombre des rouleaux de calandrage, sur l'épaisseur relative des matières, voire sur un certain différentiel des vitesses entre les rouleaux de calandrage 3, 4, 5.

Les plaques de PMMA pourront être translucides ou transparentes, et dans ce cas la couleur apparente du matériau sera celle de la couche support 6.

Si cette couleur est satisfaisante, par exemple si on désire des plaques noires on pourra utiliser de l'ABS classique de couleur noire. Si l'on désire obtenir une autre couleur, on pourra couler la couche de matière thermoplastique 6 selon la technique connue de l'extrusion multicouches en réservant pour la plus grande épaisseur sous-jacente la matière brute et pour la couche superficielle la coloration retenue.

Selon une autre technique, les plaques de PMMA pourront être peintes et décorées de toute manière désirée, et préalablement à leur mise en oeuvre, sur leur face de jonction avec la matière thermoplastique. On a effectivement constaté que dans ce cas, la peinture qui vraisemblablement migre dans la plaque en PMMA n'a aucune action sur la qualité de la jonction entre les deux couches de matériau composite, en l'espèce ABS/PMMA.

Selon la variante de mise en oeuvre schématisée à la figure 3, on a supposé que la plaque de PMMA repérée 11 était réunie à une plaque de matière thermoplastique 12 dont l'épaisseur variait en étant plus fine sur les tranches et plus importante au centre. Une telle feuille ainsi conformée peut être obtenue simplement en prévoyant par exemple une section en conformité des rouleaux de calandrage qui auront un diamètre légèrement plus important vers les bords et moins important vers le centre. Ceci peut être avantageux, par exemple si à partir du matériau composite on veut conformer une baignoire pour laquelle il sera généralement avantageux d'obtenir une épaisseur plus importante sur le fond, voire sur les côtés de la baignoire et par contre moins importante sur le dessus et notamment les deux bords latéraux. On pourra ainsi se dispenser de la mise en place de renforts de fond ou de ceinture.

De façon surprenante, la qualité du matériau composite obtenue est excellente, alliant l'excellence d'aspect superficiel de la plaque de polyméthacrylate de méthyle et sa dureté, à la rigidité de la matière thermoplastique utilisée telle que ABS pour la sous couche, le matériau composite étant exempt des défauts inhérents au PMMA, relativement fragile aux chocs et qui acquiert ainsi traité une exceptionnelle résistance à de tels chocs.

A la place de l'ABS, déjà cité, on pourra utiliser de nombreuses autres matières thermoplastiques, et l'on citera notamment : PE (polyéthylène, PS (polystyrène), PP (polypropylène) ; ces matières pourront être ou non chargées.

Le choix des matières, ainsi que le choix des épaisseurs relatives des couches sera fonction du produit qui devra être conformé par thermoformage dans un moule à partir de la feuille composite, et ce de façon en soi connue. On notera seulement que de façon générale, la feuille de polyméthacrylate de méthyle pourra être moins épaisse qu'elle ne l'était nécessairement avec l'application des techniques connues de renforcement, dans la mesure où le matériau composite a une exceptionnelle tenue n'étant en particulier sujet à aucune possible délamination. Et dans un tel matériau le PMMA pourra, même en couche mince, apporter les qualités requises d'aspect lisse et de fini et de dureté de surface intrinsèque qu'il possède.

## Revendications

1. Procédé de fabrication d'une feuille d'un matériau composite comprenant une plaque d'un polyméthacrylate de méthyle préfabriquée coulée qui constituera une couche externe du matériau composite et une couche support d'une matière thermoplastique telle que ABS (polyacrylonitrile butadiène stryrène) ou analogue caractérisé en ce qu'en vue d'obtenir une parfaite cohésion et jonction des deux couches entre-elles :
- on alimente par une extrudeuse une machine comportant des rouleaux de calandrage (3, 4, 5,) de façon à former une feuille continue (6) extrudée de ladite matière thermoplastique,
- on approvisionne régulièrement à l'entrée de la machine, d'un côté de la feuille de matière thermoplastique formée (6) lesdites plaques (7, 8, 9) de polyméthacrylate de méthyle qui sont calandrées simultanément avec la feuille de matière thermoplastique entre les rouleaux (3, 4, 5) de calandrage de la machine,
- et l'on découpe à la sortie de la machine de calandrage les feuilles de matériau composite obtenues constituées des plaques de polyméthacrylate de méthyle précitées assemblées sur une couche support en matière thermoplastique précitée.

2. Procédé selon la revendication 1 caractérisé en ce que les plaques de polyméthacrylate de méthyle sont calandrées contre la feuille extrudée de matière thermoplastique (6) dès la sortie (2) de l'extrudeuse, la première action de calandrage assurant une application de la matière thermoplastique encore fluide (10) contre la plaque de polyméthacrylate de méthyle (7) non fluide.

3. Procédé selon la revendication 1 ou la revendication 2 caractérisé en ce qu'à l'entrée de la machine de calandrage, la matière thermoplastique (6) est à sa température de fluidité telle qu'elle sort de l'extrudeuse (1), tandis que les plaques de polyméthacrylate de méthyle sont à température ambiante.

4. Procédé selon l'une des revendications précédentes caractérisé en ce que la matière thermoplastique étant du type ABS, la température d'alimentation de la feuille d'ABS (6) au niveau du premier train de calandrage (3, 4) est voisine de 240° C.

5. Procédé selon l'une des revendications précédentes caractérisé en ce que l'épaisseur des plaques de polyméthacrylate de méthyle est de l'ordre de 1 à 7 mm et avantageusement comprise entre 2,5 et 4 mm.

6. Procédé selon l'une des revendications précédentes caractérisé en ce que les plaques de polyméthacrylate de méthyle sont translucides ou transparentes et décorées préalablement à leur mise en oeuvre sur leur face de jonction avec la matière thermoplastique.

7. Procédé selon l'une des revendications 1 à 5 caractérisé en ce que les plaques de polyméthacrylate de méthyle sont translucides ou transparentes et la feuille thermoplastique précitée est formée selon la technique de l'extrusion multicouches avec une couche support de base et une couche superficielle colorée de jonction avec la plaque de polyméthacrylate de méthyle.

8. Produit industriel nouveau constitué par une feuille de matériau composite obtenu selon le procédé de l'une quelconque des revendications précédentes, caractérisé en ce qu'il comporte une plaque supérieure de polyméthacrylate de méthyle obtenue par coulée réunie de façon inséparable à une feuille support de matière thermoplastique.

9. Produit selon la revendication 8 caractérisé en ce que la feuille de matière thermoplastique a localement des épaisseurs différentes selon les nécessités d'usage de la pièce finie qui sera formée par thermoformage dans un moule à partir de la feuille de matériau composite.

## Patentansprüche

1. Verfahren zur Herstellung einer Folie eines Verbundmaterials mit einer Platte aus Polymethylmethacrylat, die eine äußere Schicht des Verbundmaterials und eine Stützschicht des thermoplastischen Materials bildet, wie z.B. ABS (Polyacrylnitril-Butadien-Styrol) oder ähnlich, dadurch gekennzeichnet, daß im Hinblick auf das Erhalten einer vollständigen Kohäsion und Verbindung der zwei Schichten untereinander:
- man durch eine Strangpresse eine Maschine beschickt, die Kalandrierwalzen (3, 4, 5) derart aufweist, daß eine fortlaufende, stranggepreßte Folie (6) aus dem thermoplastischen Material gebildet wird,
- man regelmäßig am Eingang der Maschine auf einer Seite der aus thermoplastischem Material gebildeten Folie (6) die Platten (7, 8, 9) aus Polymethylmethacrylat bereitstelit, die gleichzeitig mit der Folie aus thermoplastischem Material zwischen den Kalandrierwalzen (3, 4, 5) der Maschine kalandriert werden,
- und man am Ausgang der Kalandriermaschine die erhaltenen Verbundmaterialfolien, die aus den vorher erwähnten Polymethylmethacrylatplatten gebildet sind, abschneidet, welche auf einer vorher erwähnten Stützschicht aus thermoplastischem Material aufgebracht sind.

2. Verfahren nach Anspruch 1, dadurch gekennzeichnet, daß die Planen aus Polymethylmethacrylat gegen die aus thermoplastischem Material stranggepreßte Folie (6) von dem Ausgang (2) der Strangpresse aus kalandriert werden, wobei die erste Kalandriertätigkeit ein Aufbringen des noch flüssigen thermoplastischen Materials (10) gegen die Platte (7) aus nicht flüssigem Polymethylmethacrylat sicherstellt.

3. Verfahren nach Anspruch 1 oder nach Anspruch 2, dadurch gekennzeichnet, daß am Eingang der Kalandriermaschine das thermoplastische Material (6) seine Liquiditätstemperatur hat, sowie es die Strangpresse (1) verläßt, während die Platten aus Polymethylmethacrylat Umgebungstemperatur haben.

4. Verfahren nach einem der vorangegangenen Ansprüche, dadurch gekennzeichnet, daß wenn das thermoplastische Material vom Typ ABS ist, die Zufuhrtemperatur der Folie (6) aus ABS beim ersten Kalandriergang (3, 4) nahe 240°C ist.

5. Verfahren nach einem der vorangegangenen Ansprüche, dadurch gekennzeichnet, daß die Dicke der Platten aus Polymethylmethacrylat in der Größenordnung von 1 bis 7 mm liegt und vorzugsweise zwischen 2,5 und 4 mm beträgt.

6. Verfahren nach einem der vorangegangenen Ansprüche, dadurch gekennzeichnet, daß die Platten aus Polymethylmethacrylat durchscheinend oder durchsichtig sind und vor ihrer Verwendung auf ihrer Verbindungsseite mit thermoplastischem Material verziert sind.

7. Verfahren nach einem der Ansprüche 1 bis 5, dadurch gekennzeichnet, daß die Platten aus Polymethylmethacrylat durchscheinend oder durchsichtig sind und die vorher erwähnte thermoplastische Folie nach der mehrlagigen Strangpreßtechnik mit einer Stützschicht an der Basis und einer gefärbten Oberflächenverbindungsschicht mit der Platte aus Polymethylmethacrylat ausgebildet ist.

8. Neues Industrieerzeugnis, das aus einer Folie aus Verbundmaterial gebildet ist, welches nach dem Verfahren gemäß einem der vorangegangenen Ansprüche erhalten wird, dadurch gekennzeichnet, daß es eine obere Platte aus Polymethylmethacrylat aufweist, die durch Gießen in untrennbarer Weise mit einer Stützfolie aus thermoplastischem Material verbunden, erhalten wird.

9. Erzeugnis nach Anspruch 8, dadurch gekennzeichnet, daß die Folie aus thermoplastischem Material örtlich verschiedene Dicken nach den Gebrauchsnotwendigkeiten des fertigen Stückes hat, welches durch Wärmeformen in einer Form, ausgehend von der Verbundmaterialfolie gebildet ist.

## Claims

1. Process for manufacturing a sheet of composite material comprising a slab of moulded prefabricated polymethyl methacrylate which will constitute an outer layer of the composite material and a support layer of a thermoplastic material such as ABS (polyacrylonitrile butadiene styrene) or similar, characterised in that, for the purpose of obtaining perfect cohesion and joining of the two layers together:
- a machine including calender rolls (3, 4, 5) is fed by means of an extruder so as to form a continuous extruded sheet (6) of the said thermoplastic material,
- the said slabs (7, 8, 9) of polymethyl methacrylate are supplied at regular intervals at the feed of the machine, on one side of the sheet of formed thermoplastic material (6), the said slabs being calendered simultaneously with the sheet of thermoplastic material between the calender rolls (3, 4, 5) of the machine, and
- at the discharge from the calender machine the sheets of composite material obtained, consisting of the aforesaid slabs of polymethyl methacrylate assembled on a support layer made from the aforesaid thermoplastic material, are cut off.

2. Process according to Claim 1, characterised in that the slabs of polymethyl methacrylate are calendered against the extruded sheet of thermoplastic material (6) immediately at the discharge (2) from the extruder, the first calendering action pressing the still fluid thermoplastic material (10) against the non-fluid polymethyl methacrylate slab (7).

3. Process according to Claim 1 or Claim 2, characterised in that, at the feed to the calender machine, the thermoplastic material (6) is at its flow temperature as when it emerges from the extruder (1), whilst the polymethyl methacrylate slabs are at ambient temperature.

4. Process according to one of the preceding claims, characterised in that, the thermoplastic material being of the ABS type, the temperature at which the sheet of ABS (6) is fed to the first set of calender rolls (3, 4) is around 240°C.

5. Process according to one of the preceding claims, characterised in that the thickness of the polymethyl methacrylate slabs is around 1 to 7 mm and advantageously between 2.5 and 4 mm.

6. Process according to one of the preceding claims, characterised in that the polymethyl methacrylate slabs are translucent or transparent and are decorated, prior tb their use, on the face attached to the thermoplastic material.

7. Process according to one of Claims 1 to 5, characterised in that the polymethyl methacrylate slabs are translucent or transparent and the aforesaid thermoplastic sheet is formed by means of the multilayer extrusion technique with a base support layer and a coloured surface layer attached to the polymethyl methacrylate slab.

8. Novel industrial product consisting of a sheet of composite material obtained according to the process of any one of the preceding claims, characterised in that it includes a top polymethyl methacrylate slab obtained by moulding joined inseparably to a support sheet of thermoplastic material.

9. Product according to Claim 8, characterised in that the sheet of thermoplastic material has, locally, different thicknesses according to the requirements for use of the finished piece which will be formed by thermoforming in a mould from the sheet of composite material.
